# FASCICULE DE BREVET EUROPEEN

(11) **EP 3 393 965 B1**
(45) Date de publication et mention de la délivrance du brevet: **11.03.2020**
(21) Numéro de dépôt: 16825745.9
(22) Date de dépôt: 21.12.2016
(51) Int. Cl.: B67D 7/02, B67D 7/42

(54) **EQUIPEMENT COMPRENANT UNE VANNE COAXIALE INSÉRABLE POUR TRANSFÉRER UN FLUIDE DANS UN RÉSERVOIR ET PROCÉDÉ**
AUSRÜSTUNG MIT EINEM EINSETZBAREN KOAXIALVENTIL ZUR ÜBERTRAGUNG EINES FLUID IN EIN RESERVOIR UND VERFAHREN
EQUIPMENT COMPRISING AN INSERTABLE COAXIAL VALVE FOR TRANSFERRING A FLUID INTO A RESERVOIR, AND METHOD

(30) Priorité: 21.12.2015 FR 1562983
(43) Date de publication de la demande: 31.10.2018
(73) Titulaire: Fives Filling & Sealing, 44140 Le Bignon (FR)
(72) Inventeur: ROBE, Eric, 44140 Le Bignon (FR)
(74) Mandataire: Lavoix
(86) Numéro de dépôt international: PCT/EP2016/082253
(87) Numéro de publication internationale: WO 2017/109001

(56) Documents cités:
- EP-A2- 1 271 073
- WO-A1-2015/149739
- US-A1- 2013 037 739

## Description

La présente invention concerne un équipement et un procédé destinés à transférer un ou plusieurs fluides d'une unité de remplissage vers un réservoir ou un conduit aval. Elle trouve notamment une application pour le transfert de fluides tels que du liquide de refroidissement, du liquide de climatisation ou du liquide de frein, vers le circuit fluidique correspondant d'un véhicule, par exemple sur une chaîne d'assemblage automobile, ou encore dans le secteur de l'énergie pour le remplissage de radiateurs électriques à fluide.

Un équipement pour transférer un fluide dans un réservoir selon la préambule de la revendication 1 est montré par example dans le document US 2013/037739 A1.

Les liquides utilisés dans le secteur automobile sont pour la plupart réglementés en raison de leur nocivité pour l'environnement ou pour les opérateurs chargés du remplissage. De plus, ces liquides peuvent également être salissants ou encrassants. Lors des actions de remplissage des circuits fluidiques, il est donc important que les équipements de remplissage soient conçus pour gérer efficacement les ouvertures et les fermetures des connexions fluidiques garantissant la propreté des remplissages et la sécurité des opérateurs. A cette fin, les équipements de remplissage sont munis de modules d'accrochage venant se fixer sur les réservoirs à remplir, et de vannes permettant de bloquer ou d'ouvrir les connexions fluidiques à la demande de l'opérateur.

Ces vannes sont pilotées par des systèmes hydrauliques ou des systèmes pneumatiques ou par des systèmes électriques. Dans le domaine du remplissage de fluide, les dimensions et le poids sont des composantes importantes du choix de l'équipement de remplissage. Leur réduction permet d'améliorer l'ergonomie et de faciliter la manipulation de l'adaptateur par l'opérateur.

Une des solutions est d'utiliser des vannes coaxiales pour de réduire la taille de l'équipement de remplissage. Les vannes sont logées dans un châssis démontable adapté à différents diamètres de vannes. Les vannes sont introduites dans le châssis en les poussant. Le châssis est ensuite fixé par l'une de ses faces, à l'adaptateur, et sur une face opposée, à un module d'accrochage sur le réservoir.

L'extraction des vannes est assez fastidieuse, car il est nécessaire de démonter le châssis pour y avoir accès. Il faut ensuite extraire les vannes de leur logement par arrachage avec des outils spécifiques, en raison des frottements induits par la présence de joints d'étanchéité présents sur la paroi latérale des vannes.

Dans de nombreuses configurations, les vannes coaxiales sont assemblées directement dans le châssis, ce qui peut occasionner la perte de petites pièces lors du démontage ou de l'arrachage desdites vannes. Ces opérations de montage et démontage sont assez fréquentes et sont chronophages pour les opérateurs, et les éventuelles pertes de petites pièces réduisent la productivité des chaînes de montage.

Un but de l'invention est donc de pallier ces problèmes. Elle a plus particulièrement pour objet de simplifier l'extraction des vannes du châssis pour garantir un remplacement facile par l'opérateur, tout en maintenant les fonctionnalités et les performances de l'équipement de remplissage.

A cet effet, l'invention concerne un équipement selon la revendication 1.

Selon des modes particuliers de réalisation, l'équipement comprend l'une ou plusieurs des caractéristiques correspondant aux revendications 2 à 7, prise(s) isolément ou selon toutes les combinaisons techniquement possibles.

L'invention concerne aussi un ensemble selon la revendication 8.

L'invention concerne aussi un procédé selon la revendication 9.

Les caractéristiques et avantages de l'invention apparaîtront à la lecture de la description qui va suivre, donnée uniquement à titre d'exemple, et non limitative, en référence aux dessins annexés, sur lesquels :
- la figure 1 est une représentation schématique, en perspective, d'un ensemble selon l'invention ; et
- la figure 2 est une vue partielle en coupe axiale de l'équipement de remplissage représenté sur la figure 1.

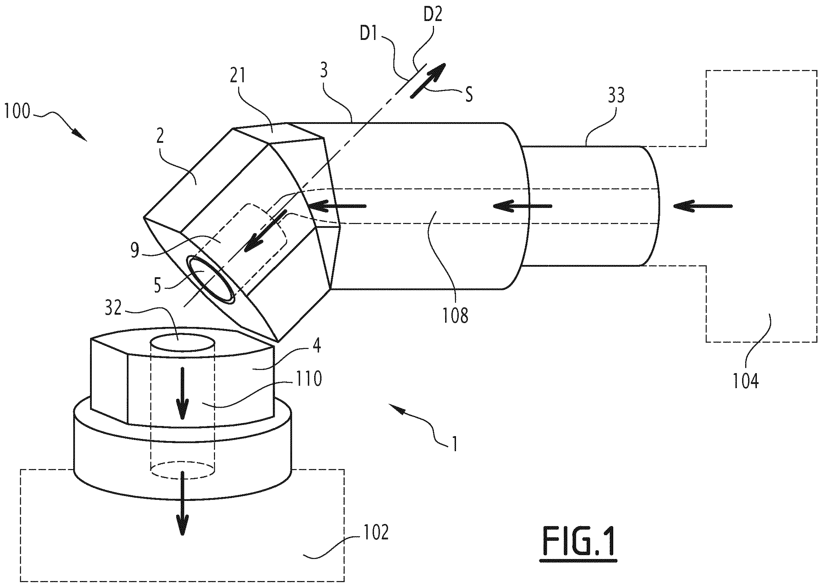

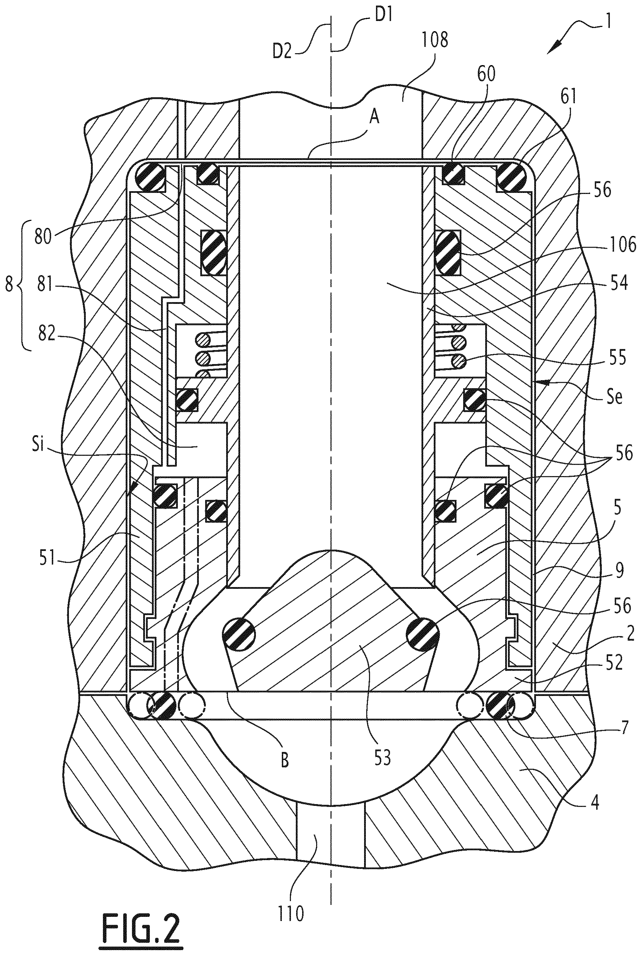

En référence aux figures 1 et 2, on décrit un ensemble 100 selon l'invention.

L'ensemble 100 concerne par exemple le secteur automobile et appartient avantageusement à une chaîne de montage (non représentée) de véhicules automobiles (non représentés). L'invention s'applique néanmoins à tous les secteurs impliquant le remplissage de fluides, notamment le secteur de l'énergie pour le remplissage des radiateurs électriques à fluide.

L'ensemble 100 comprend un réservoir ou un conduit aval 102, une source de fluide 104, et un équipement 1 pour transférer du fluide dans le réservoir à partir de la source de fluide.

Dans la variante où l'élément 102 est un conduit aval, ce dernier conduit le fluide par exemple à un réservoir à remplir.

Le fluide est par exemple du liquide de refroidissement, du liquide de climatisation ou du liquide de frein.

Le réservoir ou conduit aval 102 est ainsi, dans l'exemple représenté, un réservoir de liquide de refroidissement, de liquide de climatisation ou du liquide de frein.

La source de fluide 104 est une unité de distribution du fluide, connue en elle-même. Avantageusement, la source de fluide 104 est adaptée pour distribuer plusieurs fluides parmi ceux mentionnés ci-dessus.

Si l'élément 102 est un réservoir, l'équipement 1 est destiné à permettre un remplissage au moins partiel de ce réservoir 102. Si l'élément 102 est un conduit aval, l'équipement 1 est destiné à assurer le transfert d'au moins une partie du fluide vers ce conduit aval.

L'équipement 1 comprend une vanne 5 coaxiale définissant un passage central 106 pour le fluide selon une direction axiale D1, un châssis 2 définissant, d'une part, au moins un logement 9 pour recevoir la vanne 5 selon une direction d'insertion D2, et, d'autre part, un passage amont 108 pour le fluide. L'équipement 1 comprend aussi un module 4 définissant un passage aval 110 pour le fluide, deux joints d'étanchéité 7, 60, et un joint d'étanchéité supplémentaire 61 distinct des deux joints d'étanchéité 7, 60.

Selon un mode de réalisation particulier (non représenté), l'équipement 1 comprend plusieurs vannes analogues à la vanne 5 qui sont reçues dans plusieurs logements définis par le châssis 2.

La vanne 5 est mobile par rapport au châssis 2, par exemple en translation, selon la direction d'insertion D2 entre une position non insérée et une position insérée représentée sur les figures 1 et 2, dans laquelle la vanne 5 se situe dans le logement 9. Dans la position non insérée (non représentée), la vanne 5 se situe à l'extérieur du logement 9. La position non insérée se déduit de la position insérée représentée sur la figure 1 par une translation de la vanne par rapport au châssis 2 selon la direction d'insertion D2. La vanne 5 s'insère dans le sens figuré par une flèche S sur la figure 1, et s'enlève du logement 9 dans le sens opposé à la flèche S, comme une cartouche.

La vanne 5 (figure 2) comprend un corps 51, un obturateur 54 mobile axialement par rapport au corps, et un système 8 de pilotage pneumatique ou hydraulique de l'obturateur. La vanne 5 est dite « axiale », parce que l'obturateur 54 se déplace en translation axiale par rapport au corps 51.

Dans l'exemple représenté, la direction d'insertion D2 est parallèle à la direction axiale D1 de la vanne 5.

La vanne 5 comprend deux surfaces extrêmes A, B opposées selon la direction d'insertion D2, et une surface latérale externe Se s'étendant axialement entre les deux surfaces extrêmes et sensiblement parallèle à la direction d'insertion D2.

Le corps 51 est par exemple de forme cylindrique.

Le système 8 définit un orifice d'alimentation 80 dans le corps 51.

Les surfaces extrêmes A, B sont avantageusement planes et perpendiculaires à la direction d'insertion D2.

Le module 4 est mobile par rapport au châssis 2 entre une position ouverte (figure 1), autorisant l'insertion de la vanne 5 dans le logement 9, et une position fermée (figure 2) dans laquelle le module est fixé sur le châssis 2. Le module 4 forme par exemple un embout adapté pour être fixé sur le réservoir ou conduit aval 102. Le module 4 est par exemple articulé sur le châssis 2 par une charnière (non représentée).

Selon une variante (non représentée), le module 4 n'est pas fixé sur le réservoir ou conduit aval 102, mais se situe à l'intérieur de ce dernier.

Selon une autre variante (non représentée), le module 4 est fixé indirectement (c'est-à-dire par une ou plusieurs pièces intermédiaires) au réservoir ou conduit aval 102.

Le passage aval 110 est connecté fluidiquement au passage central 106 lorsque le module 4 est dans la position fermée. Le passage aval 110 est également connecté fluidiquement au réservoir ou conduit aval 102 lorsque l'équipement 1 est en service.

Le châssis 2 présente avantageusement une forme de poignée permettant à un opérateur (non représenté) de manipuler l'équipement 1 pour, par exemple, le connecter à la source de fluide 104 et au réservoir ou conduit aval 102.

Le passage amont 108 débouche dans le fond du logement 9 et communique fluidiquement avec le passage central 106 lorsque la vanne 5 est dans la position insérée.

Le joint d'étanchéité 61 et le joint d'étanchéité supplémentaire 60 forment respectivement des lacets fermés autour de la direction axiale D1 et sont par exemple circulaires et disposés concentriquement sur la face extrême A située du côté du fond du logement 9. Le joint d'étanchéité 61 et le joint d'étanchéité supplémentaires 60 sont comprimés sensiblement selon la direction d'insertion D2 entre la vanne 5 et le châssis 2, lorsque la vanne est en position insérée et le module 4 en position fermée (figure 2). Dit autrement, le châssis 2 forme au fond du logement 9 une butée pour la face extrême A de la vanne 5, les joints 60, 61 étant interposés.

Le joint d'étanchéité 7 est par exemple analogue structurellement au joint d'étanchéité 61, mais est disposé sur la face extrême B de la vanne 5. Le joint d'étanchéité 7 est comprimé sensiblement selon la direction d'insertion D2 entre la vanne 5 et le module 4 lorsque la vanne 5 est en position insérée et que le module 4 est en position fermée.

Le module 4, lorsqu'il est dans la position fermée, exerce une pression mécanique selon la direction d'insertion D2 en direction de la vanne 5, qui se répercute sur les joints 7, 60, 61.

Les joints d'étanchéité 61, 7 assurent l'étanchéité de la connexion fluidique entre le passage central 106 et, respectivement, le passage amont 108 et le passage aval 110.

Le joint d'étanchéité 61 et le joint d'étanchéité supplémentaire 60 sont adaptés pour assurer un contact étanche de l'orifice d'alimentation 80 avec le châssis 2, le contact étanche étant destiné à permettre une admission de fluide, par exemple de l'air comprimé, dans le système 8.

La surface latérale externe Se du corps 51 épouse une surface interne Si du châssis 2 délimitant le logement 9 lorsque la vanne 5 est dans la position insérée.

La surface interne Si est par exemple sensiblement cylindrique. La surface interne Si recouvre toute la surface latérale externe Se, la surface latérale externe Se glissant librement sur la surface interne Si selon la direction d'insertion D2 lorsque la vanne 5 passe de la position non insérée à la position insérée.

Le châssis 2 comprend avantageusement une poignée 3 intégrant des connexions fluidiques 31 en provenance d'une gaine 33 raccordée à la source de fluide 104. Les connexions 31 comprennent notamment les tuyaux d'alimentation du système 8 (non représentés), et des tuyaux acheminant les fluides à transférer dans les circuits fluidiques des véhicules.

Le châssis 2 comprend par exemple une pièce 21 amovible accrochée à la poignée 3. Le châssis 2 et la pièce 21 peuvent ne former qu'une seule et même pièce, comme dans l'exemple représenté.

Le logement 9 est non traversant. Cette caractéristique peut être obtenue par la combinaison du châssis 2 avec la pièce 21, ou bien directement à travers un châssis 2 monobloc.

La vanne 5 est introduite dans le logement 9 et sa surface latérale externe Se glisse sur la surface interne Si longitudinale.

Selon des variantes non représentées, le nombre de logements analogues au logement 9 est déterminé par la taille du châssis 2, par la taille des vannes 5 et par le nombre de connexions 31 nécessitant l'usage de vannes respectivement dédiées à un fluide et analogues à la vanne 5.

Le module 4 est par exemple un module d'accrochage sur le réservoir ou conduit aval 102. Le module 4 comprend au moins une connexion fluidique 32 destinée à être raccordée à la vanne 5. La poignée 3 comprend des commandes de pilotage (non représentées) destinées à piloter l'équipement 1, notamment l'accrochage sur le réservoir ou conduit aval 102, l'ouverture ou la fermeture de la vanne 5, et le lancement d'une séquence de remplissage.

La vanne 5 est fermée par un couvercle 52. La vanne 5 porte sur sa face extrême A les joints d'étanchéité 60 et 61 et sur sa face extrême B au moins le joint d'étanchéité 7. Les joints 60, 61 et 7 garantissent l'étanchéité de la vanne 5 du point de vue du fluide de remplissage et du fluide alimentant le système 8 d'actionnement de l'obturateur 54.

Le système 8 comporte une veine 81 et une chambre de compression 82. Dans cet exemple de réalisation de l'invention, l'orifice 80 se trouve radialement entre le joint d'étanchéité supplémentaire 60 et le joint d'étanchéité 61 qui garantissent l'étanchéité du circuit de pilotage vis-à-vis de l'extérieur et du fluide de remplissage. Le pilotage hydraulique ou pneumatique est assuré par un gaz comprimé, tel que l'air, ou par un liquide.

Un exemple non limitatif de la vanne 5 est détaillé sur la figure 2. Dans cet exemple, un siège de vanne 53 est lié à ou fait partie du couvercle 52.

L'obturateur 54 vient se placer sur le siège de vanne 53 pour fermer la vanne 5. L'obturateur 54 agit comme un piston coulissant dans le corps 51. L'obturateur 54 est repoussé vers le siège de vanne 53 par un ressort 55. Ce ressort 55 est mis en compression lorsque du gaz comprimé est envoyé dans la chambre de compression 82 du système 8 à travers la veine 81. Cet apport de gaz comprimé éloigne axialement l'obturateur 54 du siège 53, et comprime le ressort 55. La vanne 5 est alors ouverte.

Des joints 56 internes garantissent l'étanchéité entre les différentes pièces de la vanne 5.

Le ressort 55 est placé de préférence du côté amont de la chambre de compression 82 selon la direction axiale D1, ou en variante du côté aval.

Selon des variantes non représentées, le ressort 55 est remplacé par un autre système accumulant de la tension, ou par un deuxième système de pilotage pneumatique.

Les joints 60, 61 et 7 sont disposés sur les faces extrêmes A et B de la vanne 5. Avantageusement, les deux joints 60 et 61 permettent de séparer hermétiquement le flux de fluide traversant la vanne 5 de l'extérieur, mais également de séparer le fluide du système 8. Les joints 60, 61 et 7 n'étant pas situés sur la surface latérale externe Se de la vanne 5, la vanne 5 est insérée dans le logement 9 sans forcer ou sans outil. Le fait d'orienter l'équipement 1 de sorte que le logement 9 s'ouvre vers le bas permet de sortir la vanne 5 du logement 9 par l'effet de la gravité.

Sur la figure 2, la vanne 5 représentée possède une surface latérale externe Se lisse. Cependant, selon un autre mode de réalisation de l'invention (non représenté), la vanne 5 possède un mécanisme de fixation (non représenté), avantageusement par quart de tour ou par vissage dans le logement 9. Le logement 9 est alors adapté pour coopérer avec le mécanisme de fixation choisi. Dans ce mode de réalisation, le verrouillage de la vanne 5 dans le logement 9 met en pression les joints 60 et 61 dans le fond du logement 9. Une fois ce mécanisme déverrouillé, la vanne 5 sort librement du logement 9 par une simple orientation vers le bas, n'étant pas freinée par la présence de joints d'étanchéité sur sa surface latérale externe Se.

Dans un autre mode de réalisation, la vanne 5 est montée de manière différente. Par exemple, le siège de vanne 53 fait partie du corps 51 et le couvercle 52 ferme la surface extrême A de la vanne 5, à l'inverse de la configuration illustrée sur la figure 2.

Selon des modes de réalisation particuliers (non représentés) de l'invention, l'orifice 80 du système 8 est disposé sur la surface extrême B de la vanne 5, ou sur sa surface latérale externe Se. L'étanchéité est toujours assurée par les joints 7 et 60 et/ou 61. Selon un mode particulier (représenté en traits mixtes sur la figure 2), le joint 60 et le joint 7 sont tous deux disposés sur la face extrême B et assurent un contact étanche de l'orifice 80 avec le module 4, l'orifice étant disposé sur la face extrême B entre ces joints.

L'enveloppe cylindrique 51 et le couvercle 52 sont avantageusement sertis ou vissés l'un dans l'autre pour éviter une dislocation de la vanne 5 lors de son retrait du logement 9.

L'équipement 1 permet d'utiliser des vannes 5 ayant les caractéristiques décrites précédemment. L'équipement 1 facilite la mise en place et le remplacement des vannes 5 par les opérateurs. Dans une phase initiale, l'opérateur introduit la vanne 5 jusqu'à la butée au fond de son logement 9. Les joints 60 et 61 viennent en contact avec le fond du logement 9 au niveau de la connexion fluidique 31. L'opérateur fixe le module 4 sur le châssis 2, enfermant ainsi la vanne 5 à l'intérieur de l'équipement 1.

Le joint 7 vient en contact avec le module 4 au niveau de la connexion fluidique 32. En fixant le module 4 sur le châssis 2, une pression mécanique s'exerce sur les deux extrémités de la vanne 5 selon la direction d'insertion D2 et comprime les joints 60, 61 et 7, ce qui assure l'étanchéité de la vanne 5 dans l'équipement 1. L'équipement 1 est prêt à être utilisé par l'opérateur.

Par l'intermédiaire des commandes de pilotage présentes sur l'équipement 1, l'opérateur actionne la remontée de l'obturateur 54 par injection de fluide dans le système 8, ce qui ouvre la vanne 5. Lorsqu'elle est ouverte, la vanne 5 assure une continuité fluidique en raccordant entre elles les connexions fluidiques 31 et 32, c'est-à-dire le passage amont 108 et le passage aval 110.

Pour changer la vanne 5, l'opérateur met le module 4 dans la position ouverte, libérant ainsi la pression mécanique sur les joints 60, 61 et 7. Sans contrainte sur les surfaces extrêmes A, B ou sur sa surface latérale externe Se, la vanne 5 sort simplement du logement 9 dès que l'équipement 1 est basculé pour diriger l'ouverture du logement 9 vers le bas.

Grâce aux caractéristiques décrites ci-dessus, l'équipement 1 simplifie l'extraction de la vanne 5 du châssis 2 et garantit un remplacement facile par l'opérateur, tout en conservant les fonctionnalités et les performances des équipements de remplissage de l'art antérieur.

## Revendications

1. Equipement (1) pour transférer un fluide dans un réservoir ou un conduit aval (102), l'équipement (1) comprenant :
- au moins une vanne (5) coaxiale définissant un passage central (106) pour le fluide selon une direction axiale (D1), la vanne (5) ayant un corps (51),
- un châssis (2) définissant, d'une part, au moins un logement (9) pour recevoir la vanne (5), et, d'autre part, au moins un passage amont (108) pour le fluide, le passage amont (108) débouchant dans le logement (9) et étant destiné à être raccordé fluidiquement à une source de fluide (104), la vanne (5) étant mobile par rapport au châssis (2), de préférence en translation, selon une direction d'insertion (D2) entre une position non insérée dans laquelle la vanne (5) se situe à l'extérieur du logement (9), et une position insérée dans laquelle la vanne (5) se situe au moins partiellement dans le logement (9),
- un module (4) définissant un passage aval (110) pour le fluide, le passage aval (110) étant destiné à être raccordé fluidiquement au réservoir ou conduit aval (102), le module (4) étant mobile par rapport au châssis (2) entre une position ouverte, autorisant l'insertion de la vanne (5) dans le logement (9), et une position fermée dans laquelle le module (4) est fixé sur le châssis (2),
**caractérisé en ce qu'**il comprend
- au moins deux joints d'étanchéité (7, 60) formant respectivement des lacets fermés autour de la direction axiale (D1), et étant respectivement comprimés sensiblement selon la direction d'insertion (D2) entre la vanne (5) et le châssis (2) et entre la vanne (5) et le module (4) lorsque la vanne (5) est en position insérée et le module (4) est en position fermée.

2. Equipement (1) selon la revendication 1, **caractérisé en ce que** la vanne (5) possède un obturateur (54) mobile axialement par rapport au corps (51), et un système (8) de pilotage pneumatique ou hydraulique de l'obturateur (54), le système (8) comportant un orifice d'alimentation (80) défini par le corps (51) ou par un couvercle (52) de la vanne (5), et **en ce que** l'équipement (1) comprend au moins un joint d'étanchéité supplémentaire (61) distinct desdits deux joints d'étanchéité (7, 60), le joint d'étanchéité supplémentaire (61) formant un lacet fermé autour de la direction axiale (D1) et étant comprimé sensiblement selon la direction d'insertion (D2) soit entre la vanne (5) et le châssis (2), soit entre la vanne (5) et le module (4), lorsque la vanne (5) est en position insérée et le module (4) est en position fermée, le joint d'étanchéité supplémentaire (61) et l'un des deux joints d'étanchéité (7, 60) étant adaptés pour assurer un contact étanche de l'orifice d'alimentation (80) avec le châssis (2) ou avec le module (4), le contact étanche étant destiné à permettre une admission de fluide dans le système (8).

3. Equipement (1) selon la revendication 1 ou 2, **caractérisé en ce que** la vanne (5) comprend deux surfaces extrêmes (A, B) opposées selon la direction d'insertion (D2), et une surface latérale externe (Se) s'étendant axialement entre les deux surfaces extrêmes (A, B) et sensiblement parallèle à la direction d'insertion (D2), la surface latérale externe (Se) épousant une surface interne (Si) du châssis (2) lorsque la vanne (5) est dans la position insérée, la surface interne (Si) recouvrant de préférence toute la surface latérale externe (Se), et la surface latérale externe (Se) glissant librement sur la surface interne (Si) selon la direction d'insertion (D2) lorsque la vanne (5) passe de la position non insérée à la position insérée.

4. Equipement (1) selon la revendication 3, **caractérisé en ce que** les deux surfaces extrêmes (A, B) sont planes et de préférence sensiblement perpendiculaires à la direction d'insertion (D2).

5. Equipement (1) selon la revendication 3 ou 4, **caractérisé en ce que** la vanne (5) et le logement (9) sont de forme sensiblement cylindrique.

6. Equipement (1) selon l'une quelconque des revendications précédentes, **caractérisé en ce que** le châssis (2) comprend une pièce amovible (21), l'un (60) des deux joints d'étanchéité (7, 60) étant comprimé sensiblement selon la direction d'insertion (D2) entre la pièce amovible (21) et la vanne (5) lorsque la vanne (5) est en position insérée et le module (4) est en position fermée

7. Equipement (1) selon l'une quelconque des revendications précédentes, **caractérisé en ce que** la direction axiale (D1) et la direction d'insertion (D2) sont sensiblement parallèles entre elles.

8. Ensemble (100) comprenant au moins un réservoir ou conduit aval (102), au moins une source de fluide (104), et au moins un équipement (1) selon l'une quelconque des revendications précédentes, le passage amont (108) formé par le châssis (2) étant raccordé fluidiquement à la source de fluide (104), et le passage aval (110) formé par le module (4) étant raccordé fluidiquement au réservoir ou conduit aval (102).

9. Procédé pour transférer un fluide dans un réservoir ou dans un conduit aval (102), comprenant les étapes suivantes :
- fourniture d'une vanne (5) coaxiale définissant un passage central (106) pour le fluide selon une direction axiale (D1), la vanne (5) ayant un corps (51),
- fourniture d'un châssis (2) définissant, d'une part, au moins un logement (9) pour recevoir au moins la vanne (5), et, d'autre part, au moins un passage amont (108) pour le fluide, le passage amont (108) débouchant dans le logement (9), la vanne (5) étant mobile par rapport au châssis (2), de préférence en translation, selon une direction d'insertion (D2) entre une position non insérée dans laquelle la vanne (5) se situe à l'extérieur du logement (9), et une position insérée dans laquelle la vanne (5) se situe au moins partiellement dans le logement (9),
- raccordement fluidique du passage amont (108) à une source de fluide (104),
- fourniture d'un module (4) définissant un passage aval (110) pour le fluide, le module (4) étant mobile par rapport au châssis (2) entre une position ouverte, autorisant l'insertion de la vanne (5) dans le logement (9), et une position fermée dans laquelle le module (4) est fixé sur le châssis (2),
- raccordement fluidique du passage aval (110) au réservoir ou conduit aval (102),
- fourniture d'au moins deux joints d'étanchéité (7, 60) formant respectivement des lacets fermés autour de la direction axiale (D1), et
- compression mécanique des deux joints d'étanchéité (7, 60) sensiblement selon la direction d'insertion (D2) respectivement entre la vanne (5) et le châssis (2) et entre la vanne (5) et le module (4), la vanne (5) étant en position insérée et le module (4) étant en position fermée.

## Patentansprüche

1. Einrichtung (1) zum Überführen eines Fluids in einen Behälter oder eine stromabwärts gelegene Leitung (102), wobei die Einrichtung (1) umfasst:
- mindestens ein koaxiales Ventil (5), das einen Mitteldurchgang (106) für das Fluid gemäß einer axialen Richtung (D1) definiert, wobei das Ventil (5) einen Körper (51) aufweist,
- einen Grundkörper (2), der einerseits mindestens einen Aufnahmeraum (9) zum Aufnehmen des Ventils (5) und andererseits mindestens einen stromaufwärts gelegenen Durchgang (108) für das Fluid definiert, wobei der stromaufwärts gelegene Durchgang (108) in den Aufnahmeraum (9) mündet und vorgesehen ist, fluidisch an eine Fluidquelle (104) angeschlossen zu werden, wobei das Ventil (5) in Bezug auf den Grundkörper (2) gemäß einer Einführungsrichtung (D2) zwischen einer nicht eingesetzten Position, in der das Ventil (5) sich außerhalb des Aufnahmeraums (9) befindet und einer eingesetzten Position, in der das Ventil (5) sich mindestens teilweise in dem Aufnahmeraum (9) befindet, beweglich, vorzugsweise translatorisch beweglich, ist,
- ein Modul (4), das einen stromabwärts gelegenen Durchgang (110) für das Fluid definiert, wobei der stromabwärts gelegene Durchgang (110) vorgesehen ist, fluidisch an den Behälter oder die stromabwärts gelegene Leitung (102) angeschlossen zu werden, wobei das Modul (4) in Bezug auf den Grundkörper (2) zwischen einer Offenstellung, die die Einführung des Ventils (5) in den Aufnahmeraum (9) gestattet, und einer Schließstellung, in der das Modul (4) an dem Grundkörper (2) befestigt ist, beweglich ist,
**dadurch gekennzeichnet, dass** sie umfasst
- mindestens zwei Dichtungen (7, 60), die jeweils geschlossene Schlingen um die axiale Richtung (D1) bilden und jeweils im Wesentlichen gemäß der Einführungsrichtung (D2) zwischen dem Ventil (5) und dem Grundkörper (2) und zwischen dem Ventil (5) und dem Modul (4) komprimiert werden, wenn das Ventil (5) in der eingesetzten Position ist und das Modul (4) in der geschlossenen Position ist.

2. Einrichtung (1) nach Anspruch 1, **dadurch gekennzeichnet, dass** das Ventil (5) ein axial in Bezug auf den Körper (51) bewegliches Verschlusselement (54) und ein pneumatisches oder hydraulisches Steuersystem (8) des Verschlusselementes (54) besitzt, wobei das System (8) eine von den Körper (51) oder einem Deckel (52) des Ventils (5) begrenzte Versorgungsöffnung aufweist, und dass die Einrichtung (1) mindestens eine zusätzliche Dichtung (61), unterschiedlich zu den zwei Dichtungen (7, 60) umfasst, wobei die zusätzliche Dichtung (61) eine geschlossene Schlinge um die axiale Richtung (D1) bildet und im Wesentlichen gemäß der Einführungsrichtung (D2) sei es zwischen dem Ventil (5) und dem Grundkörper (2), sei es zwischen dem Ventil (5) und dem Modul (4) komprimiert wird, wenn das Ventil (5) in der eingesetzten Position ist und das Modul (4) in der geschlossenen Position ist, wobei die zusätzliche Dichtung (61) und eine der zwei Dichtungen (7, 60) angepasst sind, einen dichten Kontakt der Versorgungsöffnung (80) mit dem Grundkörper (2) oder mit dem Modul (4) sicherzustellen, wobei der dichte Kontakt vorgesehen ist, den Einlass des Fluids in das System (8) zu ermöglichen.

3. Einrichtung (1) nach Anspruch 1 oder 2, **dadurch gekennzeichnet, dass** das Ventil (5) zwei gemäß der Einführungsrichtung (D2) entgegengesetzte Stirnflächen (A, B) und eine äußere Seitenfläche (Se), die sich axial zwischen den zwei Stirnflächen (A, B) und im Wesentlichen parallel zur Einführungsrichtung (D2) erstreckt, umfasst, wobei die äußere Seitenfläche (Se) sich an eine Innenfläche (Si) des Grundkörpers (2) angepasst, wenn das Ventil (5) in der eingesetzten Position ist, wobei die Innenfläche (Si) vorzugsweise die gesamte äußere Seitenflächen (Se) überdeckt und die äußere Seitenflächen (Se) frei auf der Innenfläche (Si) gemäß der Einführungsrichtung (D2) gleitet, wenn das Ventil (5) von der nicht eingesetzten Position in die eingesetzte Position übergeht.

4. Einrichtung (1). Nach Anspruch 3, **dadurch gekennzeichnet, dass** die zwei Stirnflächen (A, B) eben und vorzugsweise im Wesentlichen senkrecht zu der Einführungsrichtung (D2) sind.

5. Einrichtung (1) nach Anspruch 3 oder 4, **dadurch gekennzeichnet, dass** das Ventil (5) und der Aufnahmeraum (9) im Wesentlichen zylindrisch sind.

6. Einrichtung (1) nach einem beliebigen der vorhergehenden Ansprüche, **dadurch gekennzeichnet, dass** der Grundkörper (2) ein lösbares Teil (21) umfasst, wobei eine (60) der zwei Dichtungen (7, 60) im Wesentlichen gemäß der Einführungsrichtung (D2) zwischen dem lösbaren Teil (21) und dem Ventil (5) komprimiert wird, wenn das Ventil (5) in der eingesetzten Position und das Modul (4) in der geschlossenen Position ist.

7. Einrichtung (1) nach einem beliebigen der vorhergehenden Ansprüche, **dadurch gekennzeichnet, dass** die axiale Richtung (D1) und die Einführungsrichtung (D2) im Wesentlichen parallel zueinander sind.

8. Anordnung (100), die mindestens einen Behälter oder eine stromabwärts gelegene Leitung (102), mindestens eine Fluidquelle (104) und mindestens eine Einrichtung (1) nach einem beliebigen der vorhergehenden Ansprüche umfasst, wobei der von dem Grundkörper (2) gebildete stromaufwärts gelegene Durchgang (108) fluidisch an die Fluidquelle (104) angeschlossen ist und der von dem Modul (4) gebildete stromabwärts gelegene Durchgang (110) fluidisch an den Behälter oder die stromabwärts gelegene Leitung (102) angeschlossen ist.

9. Verfahren zum Überführen eines Fluids in einen Behälter oder eine stromabwärts gelegene Leitung (102), die folgenden Schritte umfassend:
- Bereitstellen eines koaxialen Ventils (5), das einen Mitteldurchgang (106) für das Fluid gemäß einer axialen Richtung (D1) definiert, wobei das Ventil (5) einen Körper (51) aufweist,
- Bereitstellen eines Grundkörpers (2), der einerseits mindestens einen Aufnahmeraum (9) zum Aufnehmen des Ventils (5) und andererseits mindestens einen stromaufwärts gelegenen Durchgang (108) für das Fluid definiert, wobei der stromaufwärts gelegene Durchgang (108) in den Aufnahmeraum (9) mündet, wobei das Ventil (5) in Bezug auf den Grundkörper (2) gemäß einer Einführungsrichtung (D2) zwischen einer nicht eingesetzten Position, in der das Ventil (5) sich außerhalb des Aufnahmeraums (9) befindet, und einer eingesetzten Position, in der das Ventil (5) sich mindestens teilweise in dem Aufnahmeraum (9) befindet, beweglich, vorzugsweise translatorisch beweglich, ist,
- Anschließen des stromaufwärts gelegenen Durchgangs (108) in fluidischer Weise an eine Fluidquelle (104),
- Bereitstellen eines Moduls (4), das einen stromabwärts gelegenen Durchgang (110) für das Fluid definiert, wobei das Modul (4) in Bezug auf den Grundkörper (2) zwischen einer Offenstellung, die die Einführung des Ventils (5) in den Aufnahmeraum (9) gestattet, und einer Schließstellung, in der das Modul (4) an dem Grundkörper (2) befestigt ist, beweglich ist,
- Anschließen des stromabwärts gelegenen Durchgangs (110) in fluidischer Weise an den Behälter oder die stromabwärts gelegene Leitung (102),
- Bereitstellen von mindestens zwei Dichtungen (7, 60), die jeweils geschlossene Schlingen um die axiale Richtung (D1) bilden und
- Komprimieren der zwei Dichtungen (7, 60) im Wesentlichen gemäß der Einführungsrichtung (D2) jeweils zwischen dem Ventil (5) und dem Grundkörper (2) und zwischen dem Ventil (5) und dem Modul (4), wobei das Ventil (5) in der eingesetzten Position ist und das Modul (4) in der geschlossenen Position ist.

## Claims

1. Equipment (1) for transferring fluid into a reservoir or a downstream pipe (102), the equipment (1) comprising:
- at least one coaxial valve (5) defining a central passage (106) for the fluid in an axial direction (D1), the valve (5) having a body (51),
- a chassis (2) defining, on the one hand, at least one housing (9) for receiving the valve (5), and, on the other hand, an upstream passage (108) for the fluid, the upstream passage (108) emerging in the housing (9) and being intended to be fluidly connected to a fluid source (104), the valve (5) being movable relative to the chassis (2), preferably in translation, in an insertion direction (D2) between a non-inserted position in which the valve (5) is located outside the housing (9), and an inserted position in which the valve (5) is located at least partially in the housing (9),
- a module (4) defining a downstream passage (110) for the fluid, the downstream passage (110) being intended to be fluidly connected to the reservoir or downstream pipe (102), the module (4) being movable relative to the chassis (2) between an open position, allowing the insertion of the valve (5) in the housing (9), and a closed position in which the module (4) is fastened on the chassis (2),
**characterized in that** it comprises
- at least two sealing gaskets (7, 60) respectively forming drawstrings closed around the axial direction (D1) and being respectively compressed substantially in the insertion direction (D2) between the valve (5) and the chassis (2), and between the valve (5) and the module (4) when the valve (5) is in the inserted position and the module (4) is in the closed position.

2. The equipment (1) according to claim 1, **characterized in that** the valve (5) has a seal (54) axially movable relative to the body (51), and a pneumatic or hydraulic control system (8) for the seal (54), the system (8) including a supply orifice (80) defined by the body (51) or by a cover (52) of the valve (5), and **in that** the equipment (1) comprises at least one additional sealing gasket (61) separate from said two sealing gaskets (7, 60), the additional sealing gasket (61) forming a drawstring closed around the axial direction (D1) and being compressed substantially in the insertion direction (D2) either between the valve (5) and the chassis (2), or between the valve (5) and the module (4), when the valve (5) is in the inserted position and the module (4) is in the closed position, the additional sealing gasket (61) and one of the two sealing gaskets (7, 60) being suitable for providing sealed contact of the supply orifice (80) with the chassis (2) or with the module (4), the sealed contact being intended to allow fluid to be taken into the system (8).

3. The equipment (1) according to claim 1 or 2, **characterized in that** the valve (5) comprises two opposite end surfaces (A, B) in the insertion direction (D2), and an outer lateral surface (Se) extending axially between the two end surfaces (A, B) and substantially parallel to the insertion direction (D2), the lateral end surface (Se) molding an inner surface (Si) of the chassis (2) when the valve (5) is in the inserted position, the inner surface (Si) preferably covering the entire lateral end surface (Se), and the lateral end surface (Se) sliding freely on the inner surface (Si) in the insertion direction (D2) when the valve (5) goes from the non-inserted position to the inserted position.

4. The equipment (1) according to claim 3, **characterized in that** the two end surfaces (A, B) are planar and preferably substantially perpendicular to the insertion direction (D2).

5. The equipment (1) according to claim 3 or 4, **characterized in that** the valve (5) and the housing (9) are substantially cylindrical.

6. The equipment (1) according to any one of the preceding claims, **characterized in that** the chassis (2) comprises a removable part (21), one (60) of the two sealing gaskets (7, 60) being compressed substantially in the insertion direction (D2) between the removable part (21) and the valve (5) when the valve (5) is in the inserted position and the module (4) is in the closed position.

7. The equipment (1) according to any one of the preceding claims, **characterized in that** the axial direction (D1) and the insertion direction (D2) are substantially parallel to one another.

8. An assembly (100) comprising at least one reservoir or downstream pipe (102), at least one fluid source (104), and at least one piece of equipment (1) according to any one of the preceding claims, the upstream passage (108) formed by the chassis (2) being fluidly connected to the fluid source (104), and the downstream passage (110) formed by the module (4) being fluidly connected to the reservoir or downstream pipe (102).

9. A method for transferring a fluid into a reservoir or into a downstream pipe (102), comprising the following steps:
- providing a coaxial valve (5) defining a central passage (106) for the fluid in an axial direction (D1), the valve (5) having a body (51),
- providing a chassis (2) defining, on the one hand, at least one housing (9) for receiving at least the valve (5), and, on the other hand, an upstream passage (108) for the fluid, the upstream passage (108) emerging in the housing (9), the valve (5) being movable relative to the chassis (2), preferably in translation, in an insertion direction (D2) between a non-inserted position in which the valve (5) is located outside the housing (9), and an inserted position in which the valve (5) is located at least partially in the housing (9),
- fluidly connecting the upstream passage (108) to a fluid source (104),
- providing a module (4) defining a downstream passage (110) for the fluid, the module (4) being movable relative to the chassis (2) between an open position, allowing the insertion of the valve (5) in the housing (9), and a closed position in which the module (4) is fastened on the chassis (2),
- fluidly connecting the downstream passage (110) to the reservoir or downstream pipe (102),
- providing at least two sealing gaskets (7, 60) respectively forming drawstrings closed around the axial direction (D1), and
- mechanically compressing the two sealing gaskets (7, 60) substantially in the insertion direction (D2) respectively between the valve (5) and the chassis (2) and between the valve (5) and the module (4), the valve (5) being in the inserted position and the module (4) being in the closed position.
